# EUROPEAN PATENT APPLICATION

(11) **EP 3 623 302 A1**
(43) Date of publication of application: **18.03.2020**
(21) Application number: 19189013.6
(22) Date of filing: 30.07.2019
(51) Int. Cl.: B65B 27/12, A01F 15/07, B65B 51/07, B30B 9/30

(54) **FORAGE BALER**

(30) Priority: 07.08.2018 ES 201831251 U
(71) Applicant: Vallejo Rodriguez, Miguel, 08211 Castellar del Valles (Barcelona) (ES)
(72) Inventor: Vallejo Rodriguez, Miguel, 08211 Castellar del Valles (Barcelona) (ES)
(74) Representative: Durán-Corretjer, S.L.P.

(57) **Abstract**

Forage baler, comprising:
- means for propelling the bales to be baled, which define the direction of travel of the bale
- means for feeding the baling material
- means for securing the baling material
characterized in that the securing means arrange the baling material perpendicularly and so as to coincide with the direction of travel of the bale such that the bale is wrapped by the baling material while travelling through the baler.

## Description

The present invention relates to a novel forage baler machine.

The use of bales or bales packs of forage or straw to feed cattle is widely used in livestock farming. The use of bales or packs makes easier the logistical labour of transporting the forage from the fields where it is harvested to the points of consumption, for example, farms, and their storage, be it in livestock facilities, distributors, harvest areas, etc. However, compacting the forage or straw also involves a range of disadvantages and/or requirements, since it is important for the forage or straw to be under specific conditions, such as moisture conditions, in order to ensure the nutritional properties of the forage in the bale and to avoid potential problems in the storage thereof, such as fermentation, self-ignition, etc.

Traditionally, forage bales have been tied by means of sisal and/or wire, leaving practically the entire surface of the bale in the open air. This leads to losses in moisture and quality of the packed forage. To avoid and/or reduce these problems, techniques for baling or bagging the forage bales have been developed. The baling or bagging material must have certain properties to protect the forage from deterioration due to the sun, etc. and to prevent the forage from fermenting which significantly increases the risk of self-ignition and, consequently, of fire in the forage store.

Forage bales are usually baled or bagged manually or semi-manually with the aid of machinery; this entails limited productivity. To improve productivity, in recent times, machinery has been developed that performs the baling or bagging of bales individually, normally with the need for human intervention in some of the phases of the process, thus limiting productivity. The fact that human intervention is required also entails occupational safety risks, since it must be taken into account that the forage bales usually have a high weight.

It is an object of the present invention to solve the aforementioned problems by disclosing a forage baling machine that works with a continuous and continuing flow of bales and without the need for human intervention, thus guaranteeing a continuous flow of work and achieving significant benefits in terms of homogeneity of baling or packaging and cost savings. For this purpose, the present invention discloses a baler for forage bales, which comprises:
- means for propelling the bales to be baled, which define the direction of travel of the bale
- means for feeding the baling material
- means for securing the baling material
and in which the securing means arrange the baling material perpendicularly and so as to coincide with the direction of travel of the bale such that the bale is wrapped by the baling material while travelling through the baler.

Preferably, the baler comprises guiding means for the baling material. Preferably, said guiding means comprise at least one pair of arms. Advantageously, said arms move through a plane that is perpendicular to the direction of travel of the bale, that is to say: in embodiments in which the bales move horizontally, the arms move vertically.

Preferably, the securing means comprise at least two clamps, a first clamp being designed to secure a first end of the baling material and a second clamp being designed to secure a second end of the baling material. Advantageously, the baler comprises two pairs of clamps.

Advantageously, each of the clamps has turning capacity. Preferably, said clamps move through a plane that is perpendicular to the direction of travel of the bale.

In a preferred embodiment, the baler comprises at least one roller that tensions the baling material while said baling material is wrapping the bale as said bale travels through the baler. Additionally, said at least one roller can guide or drive the baling material. Said at least one tension roller can also prevent creases in the wrapping of the forage bale and/or keep the baling material adjusted to the shape of the bale.

Advantageously, each arm of the guiding means comprises a tension roller as described above.

Preferably, the baler additionally comprises joining means for the baling material.

In one embodiment, said joining means comprise a sewing machine designed to sew the baling material at the ends thereof, said ends overlapping each other. Although not necessary, making the ends of the baling material overlap each other is recommended because it facilitates the operation of closing or joining the baling material.

In one embodiment, said joining means comprise a strapping machine designed to position at least one strap that fastens the baling material to its particular forage bale. If the baler comprises a strapping machine, said baler preferably additionally comprises a bale lifting device, with the aim of making it easier to position the at least one strap.

Although, in general, when joining means are comprised, the baler comprises either a sewing machine or a strapping machine, embodiments that combine the use of both are also possible, that is, that comprise a sewing machine and a strapping machine. Other options for closing the wrapping include gluing both ends by means of the overlapping zone between them. Although it is also possible to join the ends of the baling material by means of staples, their use is discouraged, or even prohibited, since there is a risk that animals accidentally swallow these staples, which could cause serious injuries to their digestive system.

Preferably, the means for propelling the bales to be baled comprise two motorised conveyor belts, one conveyor belt being arranged upstream of the means for securing the baling material and the other being arranged downstream. Advantageously, both conveyor belts are arranged so as to be aligned with respect to their longitudinal axis.

Preferably, the baler additionally comprises auxiliary propulsion means for the bales to be baled. Depending on, inter alia, the geometry and weight of the forage bales and according to the arrangement of the means for propelling said bales, it may be the case that the propulsion means are not able to move the bales along the whole baler. For these cases, the baler may have auxiliary means for propelling the bales.

In one embodiment, said auxiliary propulsion means comprise at least one toothed wheel arranged at the proximal end of the conveyor belt that is arranged downstream of the securing means. In one advantageous embodiment, said auxiliary propulsion means comprise a pair of toothed wheels arranged opposite one another at the proximal end of the conveyor belt that is arranged downstream of the securing means, that is, said pair of toothed wheels are located opposite one another on the conveyor belt that is located downstream of the means for securing the baling material and close to the end, or at the same end, closer to said securing means.

In one embodiment, said auxiliary propulsion means comprise at least one piston which pushes the bale. Preferably, said piston or pistons is/are hydraulically actuated. In embodiments that have at least one piston, these pistons are responsible for pushing the bale by its rear, the front and rear being defined by the direction of travel of the bale.

Advantageously, the baling material is composed of raffia, polypropylene or the like.

Preferably, the baling material is supplied to the baler in laminar form.

Preferably, the baling material is supplied to the baler in continuous form. Advantageously, the baling material is supplied to the baler in coiled or rolled form.

Advantageously, the baler comprises cutting means for the continuous baling material. The cutting means are responsible for cutting the baling material to the length necessary for baling the forage bale. In a preferred embodiment, said cutting means comprise a heated wire. Cutting by means of heated or hot wire has the advantage that it prevents the baling material from fraying. Although it would entail certain disadvantages, it is however also possible to use other cutting means, such as blades.

Advantageously, the baler comprises a control and drive device which allows said baler to be operated automatically, that is, the baler has automatic functioning.

Preferably, the baler is designed to bale forage bales in a rectangular prism shape. However, other embodiments are also possible in which the baler is configured to bale forage bales that have a different shape, such as cylindrical.

In embodiments in which the forage bales to be baled are of rectangular prism shape, the baler preferably bales the bales on four of the six faces thereof, two faces opposite one another in parallel not being baled. Preferably, the faces that are not baled are those of the sides of greater length.

One of the advantages of the baler according to the present invention is the compact distribution of the feeding and securing elements of the baling material. The embodiments that additionally have means for cutting and/or joining the baling material have similar compactness characteristics. Preferably, said elements are arranged in an substantially vertical structure, that is, a vertical structure of reduced width.

The baler according to the present invention can be used in conjunction with other machines, such as labelling machines, bale moisture meters, etc.

According to another aspect of the present invention, a method for baling bales of forage is disclosed which comprises the following steps:
- Arranging the baling material perpendicularly and so as to coincide with the direction of travel of the bale to be baled.
- Making the forage bale travel until it comes into contact with the baling material.
- Continuing to travel the forage bale such that the baling material wraps said forage bale.

Preferably, the baling method additionally comprises the step of joining the ends of the baling material.

Preferably, the baling method additionally comprises the step of tensioning the baling material while said forage bale is being wrapped.

In this document the directions "horizontal", "vertical", "up", "down", etc. are understood according to a position in which the propulsion means and the forage bale that travels thereover are arranged in parallel with the ground.

To aid understanding, drawings of an embodiment of a baler according to the present invention are appended by way of explanatory but not-limiting example.
- Fig. 1 is an elevated front view of an exemplary embodiment of a baler according to the present invention.
- Fig. 2 is a plan view of the exemplary embodiment of a baler according to Fig. 1.
- Fig. 3 is an elevated profile view of the exemplary embodiment of the previous figures.
- Fig. 4 is a perspective view of a detail of the propulsion means, guide means, securing means and auxiliary propulsion means of an exemplary embodiment of a baler according to the present invention.
- Fig. 5 is a perspective view of a clamp of an exemplary embodiment of a baler according to the present invention.
- Fig. 6A is an elevated view of an upper clamp of an exemplary embodiment of a baler according to the present invention.
- Fig. 6B is an elevated view of a lower clamp of an exemplary embodiment of a baler according to the present invention.
- Fig. 7 is a perspective view of a detail of arms and a toothed wheel of an exemplary embodiment of a baler according to the present invention.
- Fig. 8 is a perspective view of a detail of a sewing machine of an exemplary embodiment of a baler according to the present invention.
- Fig. 9 is a perspective view of a detail of the cutting means of an exemplary embodiment of a baler according to the present invention.

In the figures, equal or equivalent elements have been identified with identical numerals.

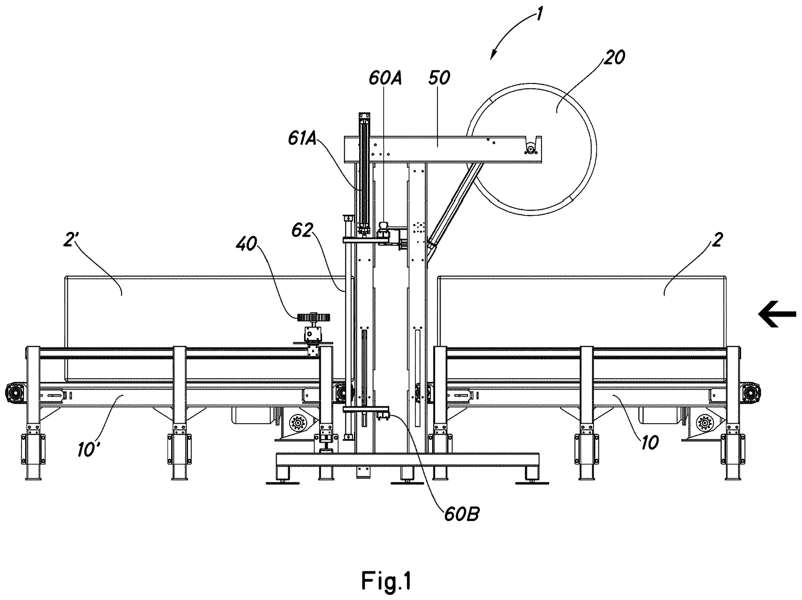

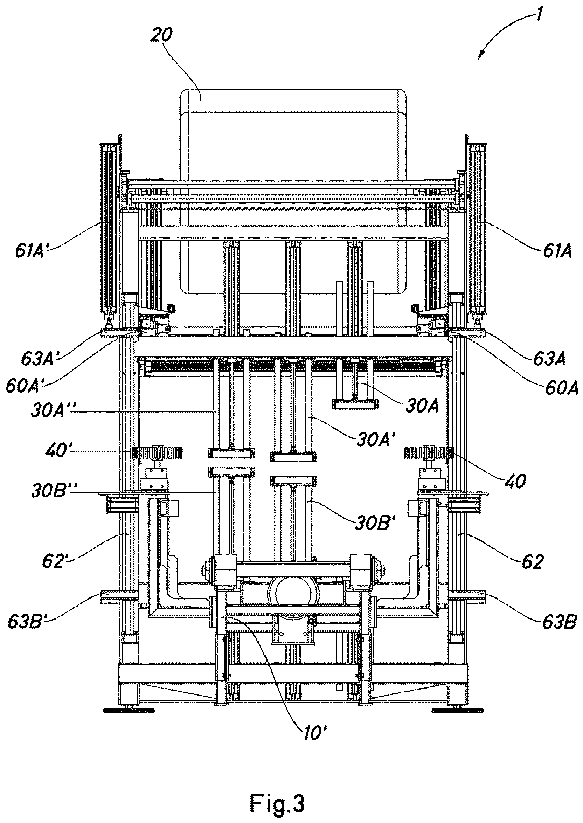

Fig. 1 to 3 show an elevated front view, a plan view and a profile view of an exemplary embodiment of a baler according to the present invention. For the purpose of teaching, in these figures, in addition to the baler -1-, a pair of bales -2-, -2'- of forage have also been shown, the first of which -2- is beginning the baling process, while the second -2'- is finishing said process. It can thus be illustrated that the baler object of the present invention operates continuously and with a continuous flow of forage bales.

This figure allows the conveyor belts -10-, -10'- to be seen which, in this embodiment, act as means for propelling the bales -2-, -2'- of forage. As can be seen, the two conveyor belts -10-, -10'- are aligned with each other, the structure -50- which houses or supports most of the elements of the baler -1- that act on the baling material -20- being located between the two belts, and the baling material itself -20- which, in the exemplary embodiment shown, is supplied in the form of rolled laminar material in a roll. In this exemplary embodiment, the roll of baling material -20- is arranged above the bales -2-, -2'- of forage.

In the exemplary embodiment shown, among the elements supported by the structure -50-, the following are emphasised: the roll of baling material -20-, the clamps -60A-, -60B-, -60A'-, -60B'-, the pistons -61A-, -61B-, -61A'-, -61B'- which move the clamps -60A-, -60B-, -60A'-, -60B'- vertically, the guides -62-, -62'-, the arms -30A-, -30B-, -30A'-, -30B', -30A"-, -30B"-, the sewing machine -70- (see Fig.- 8), the cutting means -80-, -80' using hot wire (see Fig.- 9), etc. It is important to mention that the above list is neither exhaustive nor limiting and that some of the elements mentioned are hidden due to the views used in fig. 1 to 3.

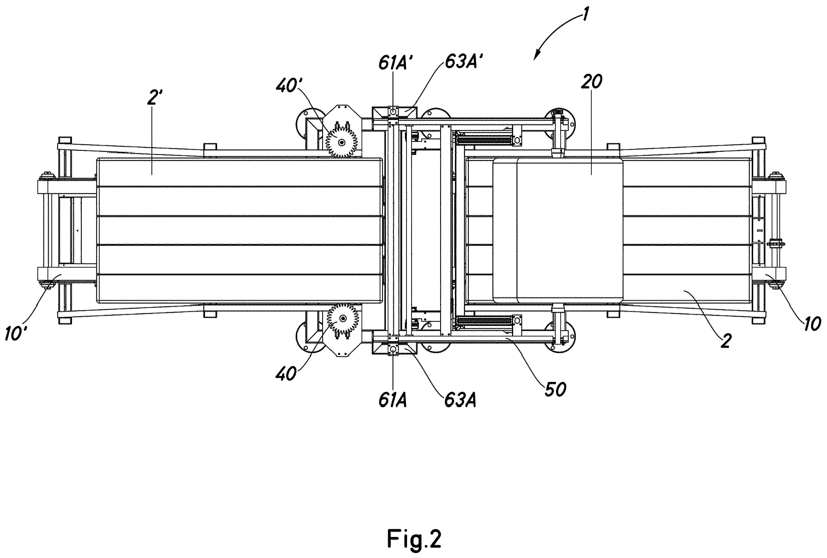

As can be seen, the exemplary embodiment shown has a pair of toothed wheels -40-, -40'- that act as auxiliary propulsion means for the bale -2-, -2'- to be baled. Said toothed wheels -40-, -40'- are arranged opposite one another at the proximal end of the conveyor belt -10'- arranged downstream of the structure -50- and the rest of the elements secured thereto. Embodiments are also possible in which said toothed wheels -40-, -40'- are located at different locations, for example, on the conveyor belt -10- arranged upstream of the structure -50-, or embodiments that contain only one toothed wheel. Embodiments comprising more than one pair of toothed wheels are also possible. In the exemplary embodiment shown, the toothed wheels -40-, -40'- are driven by respective electric motors. Preferably, the toothed wheels -40-, -40'- rotate in opposite directions, and more specifically, in the exemplary embodiment shown, the toothed wheel -40'- rotates clockwise while the toothed wheel -40- rotates anti-clockwise (as viewed from a plan view like that of Fig. 2).

In other embodiments, the auxiliary propulsion means comprise a hydraulic piston responsible for pushing the bale. Although toothed wheels and pistons are generally exclusive, they can also be used in conjunction.

The exemplary embodiment shown has three pairs of arms -30A-, -30B-, -30A'-, -30B'- and -30A"-, -30B"-. Said arms -30A-, -30B-, -30A'-, -30B'-, -30A" -, -30B"- are comprised in the guiding means of the baling material of the exemplary embodiment shown. Said arms -30A-, -30B-, -30A'-, -30B'- and -30A"-, -30B" move along a plane that is perpendicular to the direction of travel- of the bale -2-, -2'- of forage. The three pairs of arms -30A-, -30B-, -30A'-, -30B'- and -30A"-, -30B"- are shown in the figures at different heights or positions to illustrate the capacity they have to act independently; however, it should be understood that under normal operating conditions, the three pairs of arms act in a coordinated manner.

As can be seen, in Fig. 1 the direction of travel of the bale -2-, -2'- of forage has been indicated by an arrow. As is evident, said direction of travel is determined by the conveyor belts -10-, -10'- which, in the exemplary embodiment shown, act as means for propelling the bales -2-, -2'-.

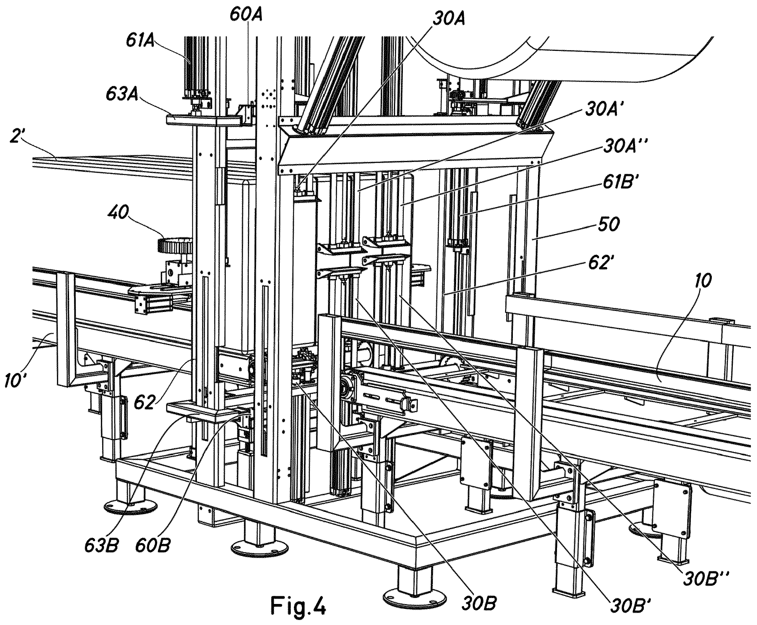

Fig. 4 is a perspective of a detail of the propulsion means, guide means, securing means and auxiliary propulsion means of an exemplary embodiment of a baler according to the present invention. This figure clearly shows how the arms -63A-, -63B- of the respective clamps -60A-, -60B- slide along the guide -62-. Said guide is oriented perpendicularly to the direction of travel of the bales -2-, -2'- of forage, which in this case coincides with the vertical. The arm -63A- is actuated by the piston -61A-, while the arm -61B- is actuated by the piston -61B- (in the figure it is hidden due to the perspective used). The above explanation is equally valid for the arms -63A"-, -63B'- and their respective clamps -60A'-, -60B'- and respective pistons -61A'-, -61B'- and the guide -62'- although, due to the perspective used, most of them are hidden.

It can also be seen in Fig. 4 that the lower arms -30B-, -30B'-, -30B"- are able to retract or descend so as to be level with or slightly below the conveyor belts -10-, -10'- (see detail of arm position -30B-). This is an important characteristic for the realization of the correct "combing" of the baling material.

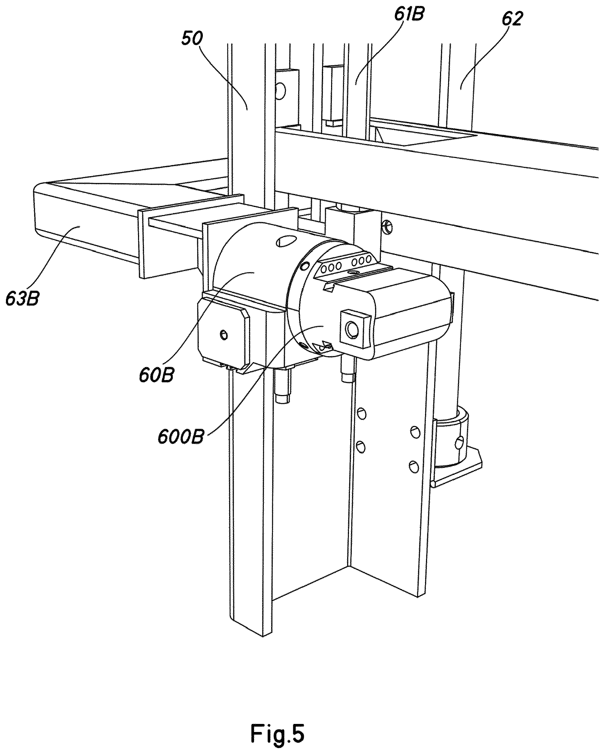

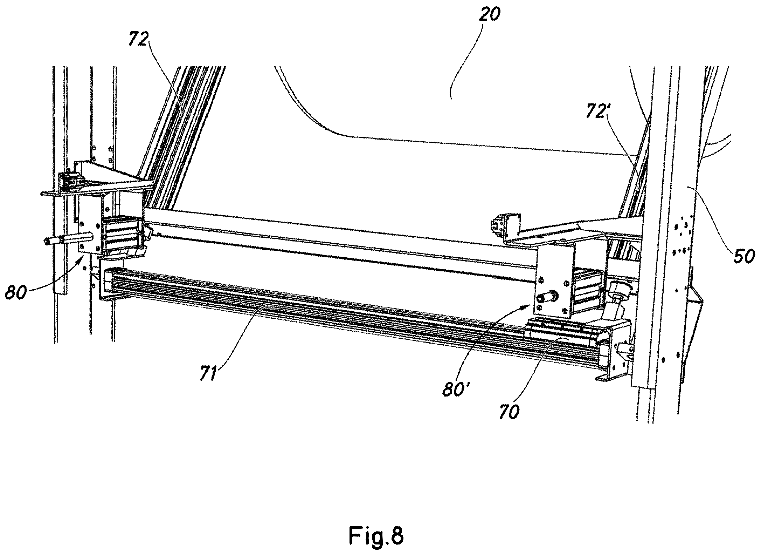

Fig. 5 is a perspective view of a clamp of an exemplary embodiment of a baler according to the present invention; more specifically, Fig. 5 shows the lower clamp -60B- of said exemplary embodiment. It should be understood that the rest of the clamps -60A-, -60A'-, -60B'- have similar characteristics. As can be seen, the clamp -60B- comprises a fixed body joined to an arm -63B- in each case and a movable part or head -600B- with the ability to rotate on its own axis and which is responsible for securing the baling material. The turning capacity of the movable part or head -600B- allows the ends of the baling material to overlap, which makes it easier for the join to be made by means of sewing (see Fig. 8).

The clamp -60B- moves along the guide -62-, actuated by the piston -61B-. Although due to the perspective used it cannot be seen exactly, in this exemplary embodiment, the arm -63B- is essentially U-shaped with a hole through which the guide -62- passes.

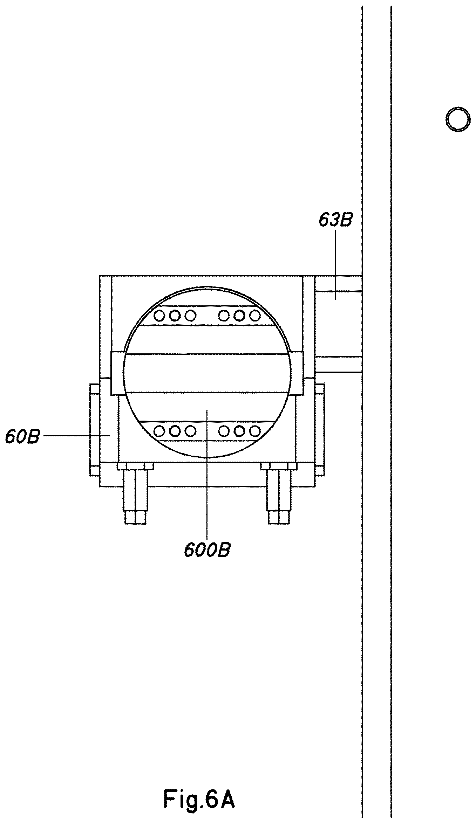

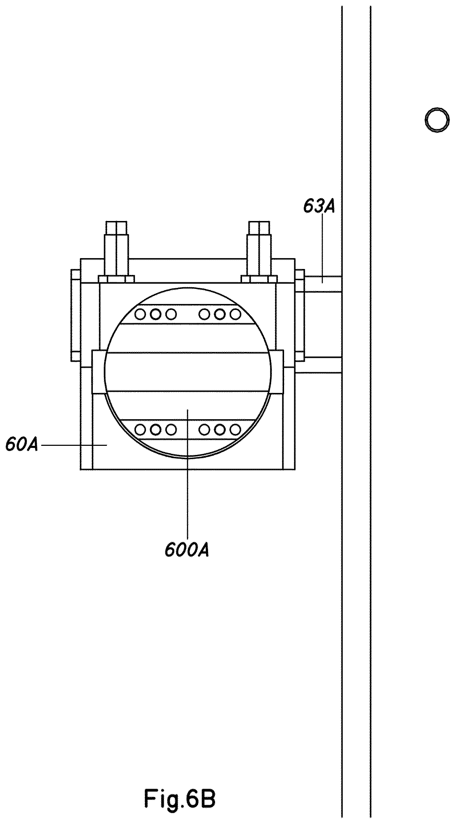

Fig. 6A and 6B show a pair of clamps -60A-, -60B- and their respective heads -600A-, -600B-. The turning capacity of the heads -600A-, -600B- allows them to hold the baling material perpendicular to the direction of travel of the bale during most of the working cycle of the baler; more specifically, it allows them to arrange the baling material perpendicular to the travel direction of the forage bale while it is being wrapped by the baling material and, once the bale is wrapped, but without the wrapping being closed, to rotate in opposite directions (one clockwise and the other anti-clockwise) such that the ends of the wrapping material are perpendicular to the rear surface of the bale and overlap each other, thus facilitating the subsequent sewing of the two ends.

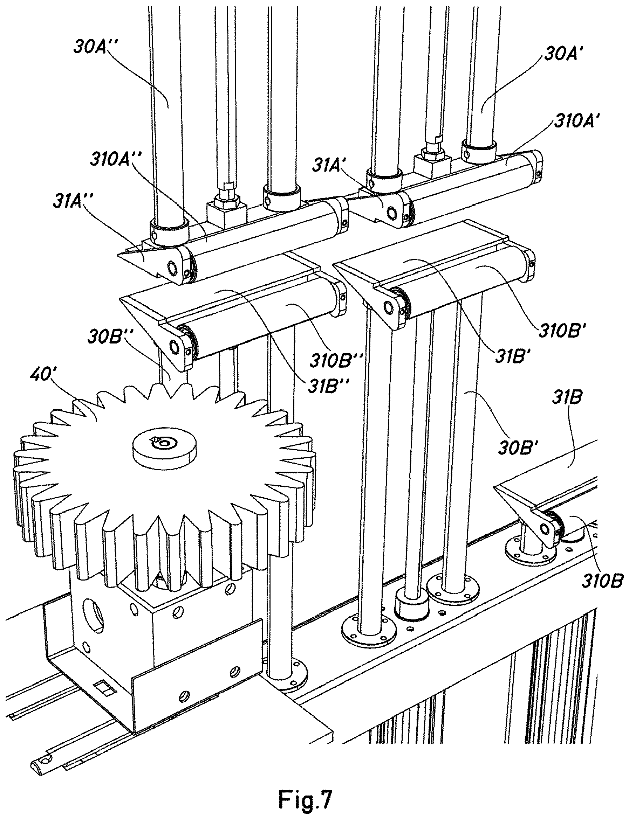

Fig. 7 is a perspective view of a detail of arms and a toothed wheel of an exemplary embodiment of a baler according to the present invention. Each arm -30A-, -30B-, -30A'-, -30B'-, -30A"-, -30B"- comprises at its end a guide -31A-, -31B-, -31A'-, -31B'-, -31A"-, -31B"- which in turn comprises in each case a roller -310A-, -310B-, -310A'-, -310B'-, -310A"-, -310B"-. The purpose of the guides -31A-, -31B-, -31A'-, -31B'-, -31A"-, -31B"- together with their respective rollers -310A-, -310B-, -310A'-, -310B'-, -310A"-, -310B"- is to guide and to tension the baling material as the forage bale is wrapped while the baling material slides along the flat surface of the guides -31A-, -31B-, -31A'-, -31B'-, -31A"-, -31B"- and their respective rollers -310A-, -310B-, -310A'-, -310B'-, -310A"-, -310B"-. Additionally, the guide-roller assembly also allows creases on the surface of the baling material to be avoided. Although, due to the perspective used in this figure, the guide -31A- and its particular roller -310A- cannot be seen, it should be understood that its construction and operation is similar to the guides that can be seen in this figure.

Fig. 8 is a perspective view of a detail of a sewing machine of an exemplary embodiment of a baler according to the present invention. In the exemplary embodiment shown, the joining means of the baling material comprise a sewing machine -70- responsible for sewing the ends of the baling material -20-. Said sewing machine -70- is mounted on a shuttle piston -71- responsible for moving the sewing machine -70- across the entire width of the baling material -20- and, consequently, across the entire width of the bale -2'- to be baled. In this exemplary embodiment, the shuttle-piston sewing machine has two pistons -72-, -72'-, one at each end of the shuttle piston -71-, which allows it to approach or move away from the bale to be baled.

In Fig. 8 the cutting devices -80-, -80'- which use hot wire can also be seen, the functioning of which will be detailed in the following.

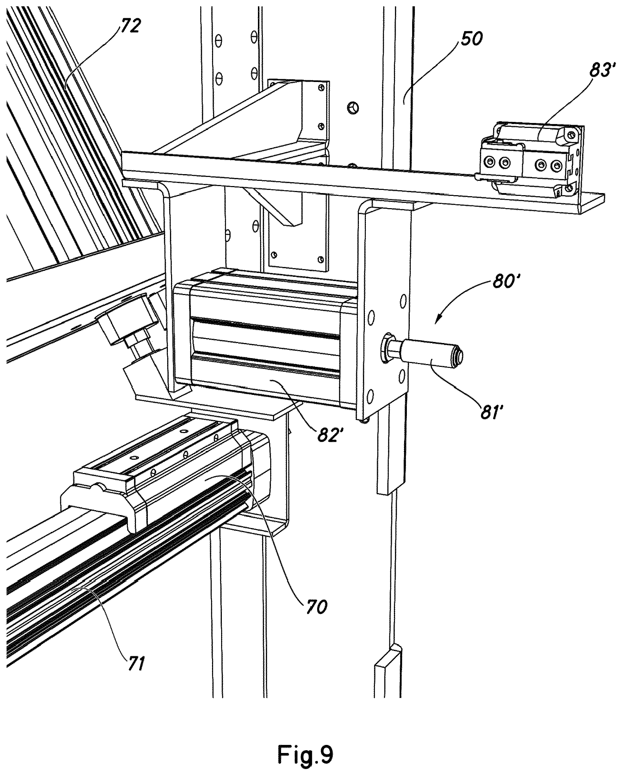

Fig. 9 is a perspective view of a detail of the cutting means of an exemplary embodiment of a baler according to the present invention. The cutting device -80-' comprises a cutting piston -82'- which in turn comprises a securing casing for the cutting wire -81'-. A clamp -83'- is located thereabove to secure the baling material while the cut is made. All the elements are anchored, directly or indirectly, to the structure -50-.

Cutting by means of hot wire has the advantage that it prevents the baling material from fraying, although it is also possible to use other cutting devices that are not as advantageous, for example blades.

In the following, the operation of an exemplary embodiment of a baler according to the present invention will be detailed on the basis of the previously described figures. The process begins with the arrangement on the conveyor belt -10- of a bale -2- of forage that must be baled. While said bale -2- travels along the conveyor belt -10-, the clamps -60A-, -60B-, -60A'-, -60B'- secure the baling material -20- such that it is arranged according to a plane that is perpendicular to the direction of travel of the bale -2- which, in the exemplary embodiment shown in the figures, is equivalent to the direction of travel of the conveyor belts -10-, -10'-. To allow the passage of the forage bale -2-, the lower clamps -60B-, -60B'- are located below the drag surface of the conveyor belts -10-, -10'-. With the same aim of allowing the passage of the forage bale -2-, the lower arms -30B-, -30B'-, -30B"- and the respective guides thereof -31B-, -31B'-, -31B" descend until they are situated below the drag surface of the conveyor belts -10-, -10'-. Furthermore, the upper arms -30A-, -30A'-, -30A"- and their respective guides -31A-, -31A'-, -31A"- are elevated to a point that prevents them from obstructing the passage of the bale -2-.

Once the baling material -20- is arranged in the manner of a curtain and the elements of the baler -1- are in a position that does not obstruct the passage of the bale -2-, the bale comes into contact with the baling material -20- which is propelled by the conveyor belt -10. At that moment, the lower clamps -60B-, -60B'- firmly secure the baling material -20- but the upper clamps allow the sliding of said material such that, as the bale -2- travels, propelled by the conveyor belts -10-, -10'-, the baling material is dragged by the bale -2 and is wrapped therearound. While the bale -2- travels and is wrapped, the upper arms -30A-, -30A'-, -30A"- and their respective guides -31A-, -31A'-, -31A"- are placed at a height that guides the baling material along the surface of the bale -2- while keeping it taut and preventing creases from occurring.

Once the end of the bale -2- has reached the plane in which the guides -31A-, -31B-, -31A'-, -31B'-, -31A"-, -31B"- and the clamps -60A-, -60B-, -60A'-, -60B' are located, they are moved until they are situated in the central plane of the bale (other positions are also possible). For this purpose, the lower guides and the lower clamps -31B-, -31B'-, -31B"-, -60B-, -60B'- rise and the upper guides and upper clamps -31A-, -31A'-, -31A"-, -60A-, -60A'- lower. By means of this movement, the bale -2- is completely baled, with the baling material -20- made taut.

The next step is to join the baling material -20-. For this purpose, the exemplary embodiment shown in Fig. 1 to 9 comprises a sewing machine -70-. To facilitate sewing of the baling material -20-, the clamps -60A-, -60B-, -60A'-, -60B'- rotate in such a way that the ends of the baling material are perpendicular to the rear surface of the bale -2- and overlap each other. To cut the baling material -20- to the required length, the baler has cutting devices -80-, -80'- which use hot wire. Said cut can be made before or after sewing the ends of the baling material.

Once the bale -2- is baled, it continues moving along the conveyor belt -10'- to continue with the process of storage and/or distribution of said bale and the baler repositions its movable elements (clamps, guides, etc.) in order to bale the next bale.

Depending on the geometry and weight of the bales to be baled, it may be necessary to use auxiliary propulsion means which, in the exemplary embodiment shown, comprise a pair of toothed wheels -40-, -40'- that help to propel the bale while it is passing through the separation between the conveyor belts -10, -10'-.

As can be seen from the drawings, in the exemplary embodiment shown, the bales -2- of forage to be baled have a rectangular prism shape and are baled on four of the six faces thereof, the lateral faces, that is, those of greater length, being the ones exposed.

Although the invention has been set out and described on the basis of various embodiments thereof, it should be understood that said exemplary embodiments do not in any way limit the present invention, and that the scope of the present invention should be considered to include any variants that are covered, directly or by way of equivalence, by the content of the appended claims.

## Claims

1. Forage baler, comprising:
- means for propelling the bales to be baled, which define the direction of travel of the bale
- means for feeding the baling material
- means for securing the baling material
**characterized in that** the securing means arrange the baling material perpendicularly and so as to coincide with the direction of travel of the bale such that the bale is wrapped by the baling material while travelling through the baler.

2. Baler according to claim 1, **characterised in that** it comprises guiding means for the baling material.

3. Baler according to claim 2, **characterised in that** said guiding means comprise at least one pair of arms.

4. Baler according to claim 3, **characterised in that** said arms move through a plane that is perpendicular to the direction of travel of the bale.

5. Baler according to any one of the preceding claims, **characterised in that** the securing means comprise at least two clamps, a first clamp being designed to secure a first end of the baling material and a second clamp being designed to secure a second end of the baling material.

6. Baler according to claim 5, **characterised in that** each of the clamps has turning capacity.

7. Baler according to either claim 5 or claim 6, **characterised in that** said clamps move through a plane that is perpendicular to the direction of travel of the bale.

8. Baler according to any one of the preceding claims, **characterised in that** it comprises at least one roller that tensions the baling material while said baling material is wrapping the bale as said bale travels through the baler.

9. Baler according to claim 8, **characterised in that** each arm comprises a tension roller.

10. Baler according to any one of the preceding claims, **characterised in that** it additionally comprises joining means for joining the baling material.

11. Baler according to claim 10, **characterized in that** said joining means comprise a sewing machine designed to sew the baling material at the ends thereof, said ends overlapping each other.

12. Baler according to either claim 10 or claim 11, **characterised in that** said joining means comprise a strapping machine designed to position at least one strap that fastens the baling material to its particular bale of forage.

13. Baler according to any one of the preceding claims, **characterised in that** the means for propelling the bales to be baled comprise two motorised conveyor belts, one conveyor belt being arranged upstream of the means for securing the baling material and the other being arranged downstream.

14. Baler according to any one of the preceding claims, **characterised in that** it additionally comprises auxiliary propulsion means for the bales to be baled.

15. Baler according to claims 13 and 14, **characterized in that** said auxiliary propulsion means comprise a pair of toothed wheels arranged opposite one another at the proximal end of the conveyor belt that is arranged downstream of the securing means.
